# EUROPEAN PATENT APPLICATION

(11) **EP 2 174 731 A1**
(43) Date of publication of application: **14.04.2010**
(21) Application number: 08007733.2
(22) Date of filing: 22.04.2008
(51) Int. Cl.: B21D 33/00, B23K 35/02, C22C 45/00

(54) **Method for forming amorphous foil**

(71) Applicant: AIC S.A., Gydnia 81-577 (PL)
(72) Inventor: Kupisz, Robert, 80-299 Gdansk (PL)
(74) Representative: Proscinski, Jan

(57) **Abstract**

According to the invention, the method is characterised by that, during linear transmission, the processed amorphous metal foil undergoes edge or cyclical moulding that creates transverse/longitudinal folds forming flat wall surfaces that - due to the notching action - alter their mutual positions, forming the assumed polygonal profile.

## Description

The subject of the invention is a method of shaping amorphous metal foil used in soldering processes.

In the present state of technology, in order to solder stainless steel elements various materials in the form of pastes or sprays requiring complicated manufacturing processes are used. Moreover, in the current solutions flat metal foils are utilised, which hinders the application of metal foil in soldering elements of complicated shape.

According to the invention, the nature of the solution is a method of shaping amorphous metal foil during which amorphous metal foil in the shape of a band, tape or sheet that, during linear transmission, undergoes constant or cyclical edge forming of notches which creates transverse/longitudinal folds forming wall surfaces. These walls, due to the notch influence, alter the mutual positions, thus ultimately forming the intended polygonal profile.

According to the invention, the solution creates the possibility to insert metal foil into deep apertures and cracks, at the same time ensuring the obtaining of the required index of adhesion to the surfaces of the soldered elements.

By forming the profile according to the invention, the effect of formed metal foil profile expansion is achieved, eliminating the need for additional preliminary fixing. Moreover, the invention solves the problem of putting the soldering foil in oblong channels or cracks, most favourably having round or oval cross sections. The method also creates the possibility of preliminary preparation of prefabricates of combined units. The method can be fully automated with the possibility of being utilised in mass and multi-series production.

According to the invention, the method is presented below in the form of an example of an application of soldered material in the form of shaped profile in opening channels inside a lamellar heat exchanger. During linear transmission, the processed amorphous metal foil in the form of a tape is subject to cyclical edge folding, creating longitudinal notches forming flat wall surfaces which - due to the notching action - alter their mutual positions, creating the intended profile of an octagonal-based prism.

## Claims

1. The method of forming amorphous metal foil is characteristic in that during linear transmission, the processed amorphous metal foil in the form of a band, tape or sheet undergoes constant or cyclical edge forming of a notch that creates transverse/longitudinal folds forming wall surfaces which - due to the notching action - alter their mutual positions, creating the assumed polygonal profile.
